# EUROPEAN PATENT SPECIFICATION

(11) **EP 1 298 979 B1**
(45) Date of publication and mention of the grant of the patent: **12.03.2008**
(21) Application number: 00942266.8
(22) Date of filing: 04.07.2000
(51) Int. Cl.: A01D 41/06, A01D 41/14, A01D 47/00

(54) **HARVESTING MACHINE**
ERNTEMASCHINE
MACHINE DE RECOLTE

(43) Date of publication of application: 09.04.2003
(73) Proprietor: Eyre, Robert John, Alford, Lincolnshire LN13 9NX (GB)
(72) Inventor: Eyre, Robert John, Alford, Lincolnshire LN13 9NX (GB)
(74) Representative: Loven, Keith James
(86) International application number: PCT/GB2000/002565
(87) International publication number: WO 2002/001935

(56) References cited:
- EP-A- 0 067 104
- DE-A- 2 418 995
- DE-A- 3 125 659
- FR-A- 2 730 126
- GB-A- 1 479 270
- US-A- 4 663 921
- US-A- 4 739 774
- US-A- 4 896 486
- US-A- 5 299 413

## Description

### Field of the invention

This invention relates to a harvesting machine for harvesting seed and grain crops.

### Background to the Invention

Conventional harvesting machines for grain and seeds separate the cutting of the crop and the threshing to extract the grain or seeds from the rest of the cut crop material into two distinct stages. In order to maximise the rate of harvesting, it may seem desirable to widen the cutting stage as much as possible so as to cut a wide swathe through the crop. However, because the cut material is then funnelled into the threshing stage of the machine, the wider the cutting stage is made, the greater is the capacity of the threshing stage required to handle the volume of cut material passed thereto. It is not practical simply to make the threshing stage larger in size, since the resultant machine would be too large to transport, and too large to use in smaller spaces. It is necessary, therefore, to attempt to increase the speed and power of the threshing stage, and in practice the advantages of higher harvesting rate are offset by the greater cost and power consumption of the machine.

One problem is that the threshing stage has to handle a very high volume of cut crop material, most of which is then discharged back on to the field to be collected or processed in a separate operation subsequently. Another problem is that the cut crop material is funnelled into a relatively narrow width in the machine for threshing. An example of this is illustrated in GB-A-1 479 270, which discloses a cutting head for a harvesting machine, in which head some preliminary threshing is carried out before the cut material is accumulated centrally by augers to be passed through the body of the harvesting machine by straw walkers and discharged at the rear of the machine in conventional manner.

DE-A-34 19 314 (equivalent to AU-A-21642/83) also discloses a cutting head in which threshing takes place. Waste material is discharged directly from the cutting head. However, this device is arranged not to cut a standing crop, but to cut the heads from the stalks, thus minimising the quantity of straw to be processed. While such an arrangement is suitable for certain types of crop grown under certain types of climatic condition, in particular for cereal crops as grown in Australia, it is unsuitable for crops which do not offer distinct "ears" of grain, and does not suit areas where the farming practice is to cut straw for incorporation into the soil or for collection for bailing; a separate operation would be required for this, adding to the costs.

The present invention seeks to overcome these problems.

### Summary of the Invention

According to the invention, there is provided a harvesting machine comprising a cutting head containing cutting means for cutting crop material including seeds or grains, and threshing means for separating seeds or grains from the cut crop material, wherein the threshing means threshes over a width substantially equal to the width of the cutting means, and wherein waste material is discharged from the threshing means over substantially the full width thereof, characterised in that the cutting means is arranged to cut crop including varying lengths of stalk, and the threshing means comprise a rotary beater and a fixed grid comprising transversely-extending bars, the cut crop being beaten by the beater as the crop is moved over the grid and bars, and waste material, including said varying lengths of stalk, being discharged to the rear of the grid.

The cutting means may comprise fixed blades with means for urging the crop into the blades. It might also be possible to use shear blades reciprocating relative to fixed blades.

Seeds or grains falling through the grid may be collected and transported by transverse conveyor means, which may move the seeds/grains to one end of the cutting head, or to a central collecting point therein. The waste crop material may be discharged to the ground, or passed to one or more further threshing stages external of the cutting head.

By threshing over the full width of the cutting means, the volume of material being handled over a given width of the threshing means is substantially reduced, permitting a higher extraction efficiency in length terms, and thus making it practical to incorporate the threshing stage into the cutting head, if desired.

The cutting head is suitably mounted on a self-powered vehicle so as to be movable vertically relative thereto, and means may be provided for detecting the height of the crop to be harvested ahead of the vehicle, and means responsive to the crop height detected move the cutting head, whereby the proportion of the height of the crop cut remains substantially constant.

The detecting means may be mechanical, but other means may be employed, for example an optical detector. The mechanical means may comprise a pivoted paddle projecting forward of the vehicle and resting on the crop, and signalling means for generating a signal in response to rotation of the paddle as the crop height varies. The paddle preferably carries a lightweight roller which runs on the upper surface of the crop. The roller may comprise a plurality of tubes which engage the crop in succession as the roller rotates. The tubes may be inflated plastics members or they may be formed from an expanded plastics material. Means may be provided to balance the weight of the roller so that it exerts a downward force on the crop just sufficient to maintain contact therewith without causing significant bending of the crop stalks.

The cutting head may carry a separate cutter, if desired, to cut down the remaining portion of the crop plants after removal of the seed- or grain-carrying portions. The cut waste then passes beneath the machine without the need for it to be processed in the machine. The separate cutter may alternatively be mounted separately on the machine, or may follow the machine, for example being trailed behind the self-powered vehicle. The result may then be, after removal of the cut waste, a stubble which can be ploughed in to the soil in conventional manner.

The cutting head of the invention may be installed as a replacement for the conventional cutting head of a combine harvester, or it may be mounted on a suitable vehicle having the ability to supply power to the head. Drive of the cutter and thresher in the head may be provided by hydraulic motors supplied with hydraulic power from the supporting vehicle, although mechanical drive may also be possible using a power take-off from the supporting vehicle. In an alternative embodiment of the invention, the cutter and thresher are driven by a separate engine mounted thereon.

### Brief Description of the Drawings

In the drawings, which illustrate an exemplary embodiment of the invention:
Figure 1 is a perspective view of the cutting head with the drive and supporting means omitted for the sake of clarity;
Figure 2 is a side elevation of the cutting head shown in Figure 1;
Figure 3 is a diagram showing a side view of a cutting height detecting means;
Figure 4 is a diagram showing a side view of the cutting head with supporting means for controlling the height of the cutting head according to the height measured by the device shown in Figure 3;
Figure 5 is a diagrammatic side elevation of an alternative design of spool or rotor in conjunction with the cutting bar;
Figure 6 is a side elevation of an alternative beating rotor;
Figure 7 is a top plan view of the cutting head, omitting the rotor; and
Figure 8 is an enlarged view of a section of the rotor shown in Figure 5.

### Detailed Description of the Illustrated Embodiments

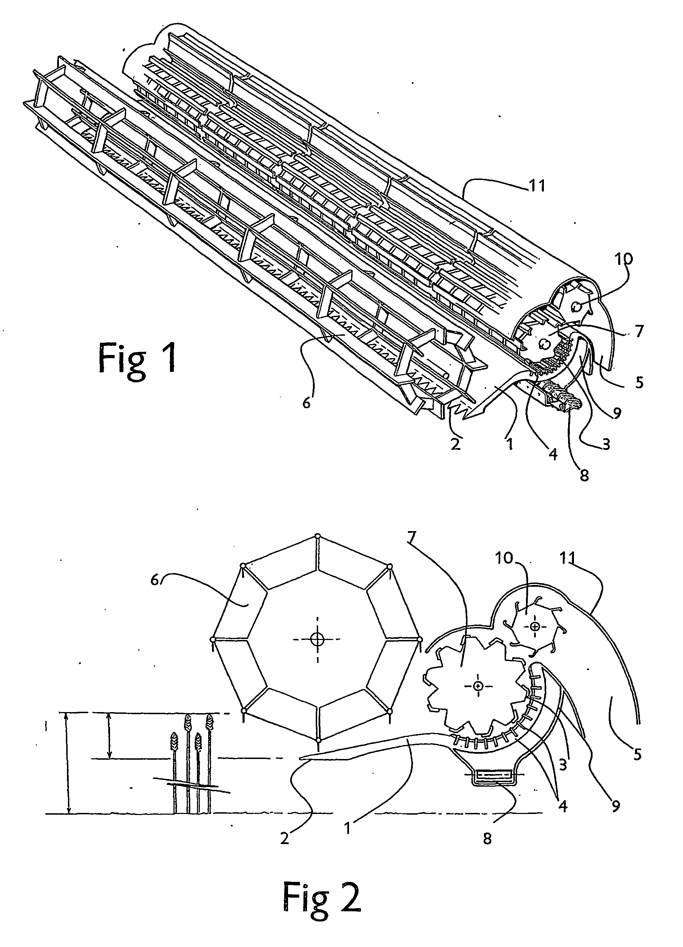

Referring first to Figures 1 to 4, the cutting head comprises a forwardly-projecting cutting blade 1 divided into a plurality of teeth 2, the blade leading into a threshing section having a mesh grid 3 with transversely-extending bars 4 set into it. An ejection chute 5 is located rearwardly of the threshing section to discharge waste material on to the ground. A flail rotor 6 is mounted for rotation above the blade 1 so as to urge the crop on to the teeth 2, where the uppermost parts of the crop stalks are cut. The flail 6 also serves to urge or project the cut material towards the threshing section, where a beater rotor 7 draws the material in and beats the material as it passes over the grid 3 and bars 4. This action liberates the grain or seeds in the crop, allowing them to fall through the grid on to a transverse conveyor 8 which transports the grain/seeds to a collection point at one end of the cutting head. A curved guide 9 directs the grain from other parts of the grid 3 on to the conveyor 8. A lifting rotor 10 lifts the waste crop material emerging from the threshing section and delivers it into the chute 5. An upper cover 11 encloses the threshing section and forms the other half of the ejection chute 5.

It will be seen from Figure 1 that the beater rotor 7 and the lifting rotor 10 are each formed from a series of shorter sections, permitting the threshing section of the cutting head to be assembled into any of a range of different modular widths.

Figure 2 in particular shows how the cutting head may be positioned so as to cut the crop at a height which captures all the seed/grain-bearing parts while minimising the additional material collected, thus also minimising the work needing to be done by the threshing section. Control of the height of the cutting head is suitably achieved by detecting the uppermost height of the crop as a whole and then positioning the blade 1 at a predetermined distance below the uppermost height detected. This is preferably carried out dynamically, so that variations in the crop height across a field are accommodated.

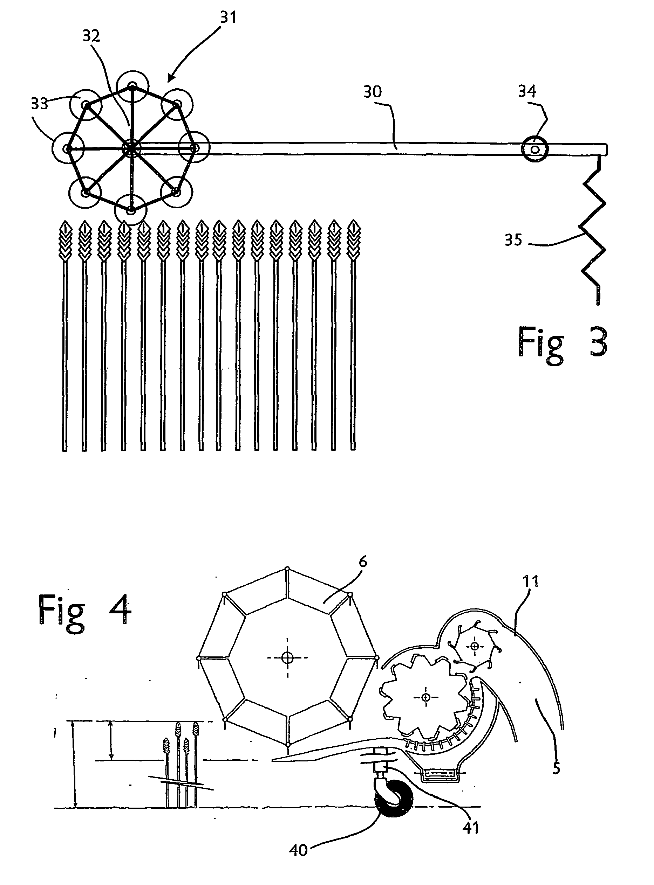

Figure 3 illustrates diagrammatically one way of detecting the crop height to control the operating height of the cutting head. An arm 30 is mounted on the cutting head (not shown for clarity) and projects forward in the direction of travel. The free end of the arm 30 carries a roller 31 made up of a frame 32 supporting eight transversely mounted inflated plastics sleeves 33 whose function is to achieve the greatest possible contact area on the crop surface with minimum weight. (It will be understood that the number of sleeves on the roller is not critical to the invention, and there may be fewer or more than eight).

The roller is rotatably mounted so that the sleeves 33 come into contact with the crop successively as the cutting head, and with it the roller, advances through the crop. The arm 30 is mounted on a pivot 34 and is provided with a spring 35 or the like to counterbalance the weight of the arm and roller projecting forward so that the downwards force of the roller on the crop is set to a minimum necessary to maintain the roller in contact with the crop without distorting or compressing the crop. A rheo-stat mounted on the end of the pivot shaft 34 provides a variable current output proportional to the degree of rotation of the arm 30 relative to the cutting head. This current is then used to provide a control signal to the hydraulic valve or valves controlling the level of the cutting head, as will be described hereinafter with reference to Figure 4. It will be appreciated that the rheostat could be incorporated into a simple bridge circuit whose output could then be used in a simple feedback control loop, since the relative angle between the arm and the cutting head needs to be kept substantially constant to achieve a constant cutting height in the crop (i.e. so that the length of crop cut is substantially constant relative to the uppermost level of the crop, taken as a whole). The cut length can be adjusted by adjusting the selected angle between the arm 30 and the cutting head.

Figure 4 illustrates one way in which the height of the cutting head may be controlled. The cutting head is carried by a pair of caster wheels 40, each carried on a leg 41 which incorporates a hydraulic ram. A fast-acting solenoid valve supplies fluid to the ram or allows it to flow from the ram according to the control instructions generated in response to the height measurement produced by the arrangement described with reference to Figure 3, for example. The caster wheels support the weight of the cutting head, while permitting it to steer in response to the movement of the vehicle to which it is attached.

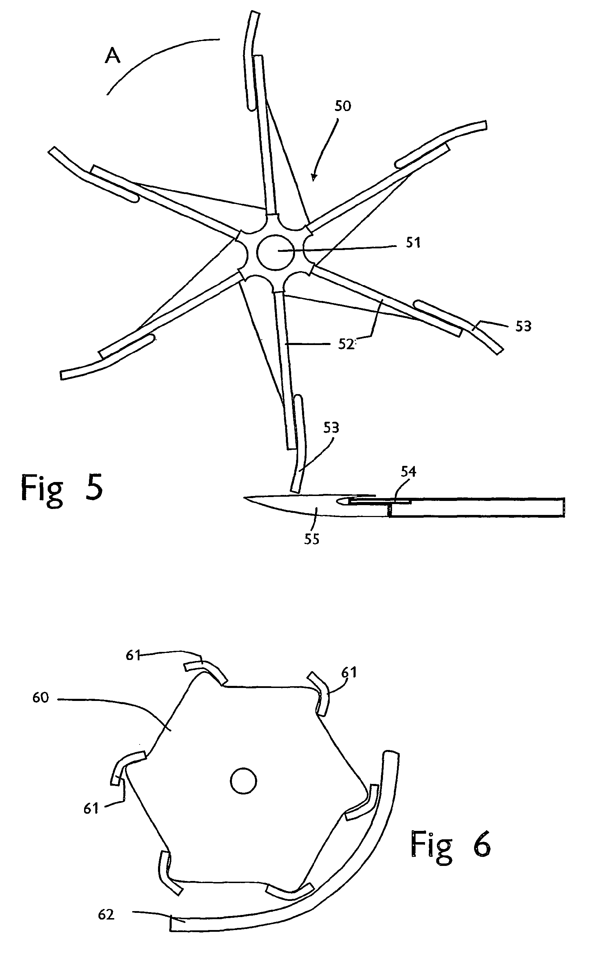

Referring now to Figure 5, the spool or rotor 50 comprises a hub 51 mounting a plurality of laterally-spaced sets of six arms 52, corresponding pairs of arms in adjacent sets carrying between them a vane 53 which is curved rearwards relative to the direction of rotation so as to present a generally vertical face to the crop as it is engaged by the cutting blades 54 and 55. The spool 50 is rotated in the direction shown by arrow A at a speed which is proportional to the ground speed of the supporting vehicle, the vanes serving not only to guide the crop into contact with the cutting blades 54 and 55, but also to propel the cut crop rearwardly towards the threshing section. The cutting blades comprise fixed, generally triangular blades 54 secured to the leading edge of the cutting head, and laterally reciprocable blades 55 which partially overlap the fixed blades.54. in a vertical direction.

Figure 6 shows a modified beater rotor 60 in the threshing section of the cutting head. The rotor is of generally hexagonal configuration and mounts a beater bar 61 along each corner of the hexagon. The beater bars 61 are curved and have a plurality of angled grooves cut in the external face thereof, the grooves in one bar being angled in the opposite sense to those in the adjacent bars. The bars act against a curved mesh surface 62 such that grain falls through while the remainder of the crop material is carried upwardly for disposal. The grain (and a certain amount of chaff and the like) falls on to a laterally-extending conveyor. It may then be either be carried into a conventional combine harvester for final separation, or conveyed to a further separation stage mounted above the threshing section, in which it is again transported laterally while being tumbled in an air stream to carry away the chaff for disposal, leaving the clean grain to be delivered at the end of the separation stage, i.e. at the side of the cutting head.

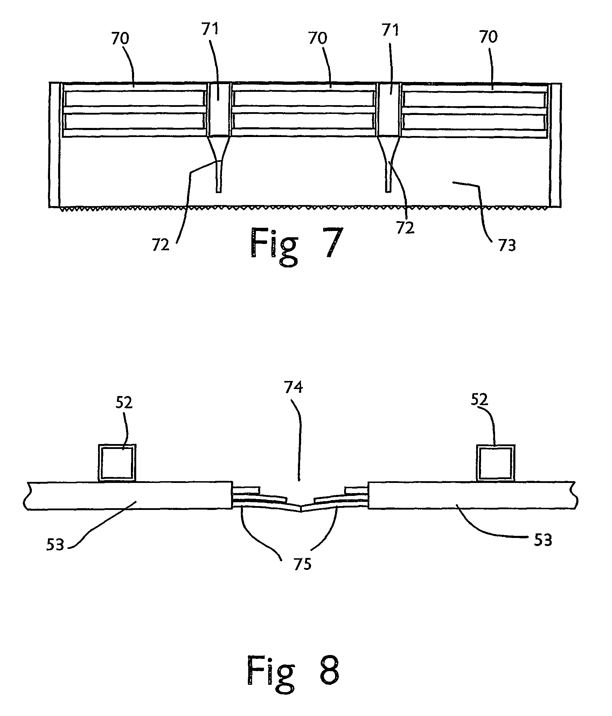

Figure 7 shows an alternative configuration of the cutting head, in which the threshing section is divided into three lateral sections to improve the support of the beater rotor and to simplify its construction. The arrangement also permits individual sections to be removed for repair or replacement. The outer two of the three individual beater rotor sections 70 are mounted between the sides of the cutting head and intermediate bearing supports 71, while the inner rotor section 70 is carried solely between the supports 71. To guide the cut crop away from the bearing supports 71, two tapered guides 72 are mounted in front of the supports 71 on the lower surface 73 of the cutting head. To permit the spool 50 to pass over the guides 72, the vanes 53 are mounted so as to leave lateral gaps 74 between them, as may be seen from Figure 8. However, since the gaps 74 would leave parts of the crop unguided before and during cutting, reducing efficiency of harvesting, the gaps are filled by mounting a series of rubber blades 75 in the ends of the vanes 53, the blades in each series being stepped so that one pair meet, while the other blades serve as support without meeting. As the spool rotates, the blades 75 separate as they pass over the guides 72 and then close again as they clear the guides, ensuring that a continuous vane surface is presented to the crop on the next rotation.

## Claims

1. A harvesting machine comprising a cutting head containing cutting means (2, 6, 54, 55) for cutting crop material including seeds or grains, and threshing means (3, 4, 7) for separating seeds or grains from the cut crop material, wherein the threshing means threshes over a width substantially equal to the width of the cutting means, and wherein waste material is discharged from the threshing means over substantially the full width thereof, **characterised in that** the cutting means is arranged to cut crop including varying lengths of stalk, and the threshing means comprise a rotary beater (7) and a fixed grid (3) comprising transversely-extending bars (4), the cut crop being beaten by the beater (7) as the crop is moved over the grid (3) and bars (4), and waste material, including said varying lengths of stalk, being discharged to the rear of the grid.

2. A harvesting machine according to Claim 1, wherein the cutting means comprise fixed blades (2) with means for urging the crop into the blades.

3. A harvesting machine according to Claim 2, comprising shear blades (54) reciprocating relative to the fixed blades (55).

4. A harvesting machine according to Claim 1, 2 or 3, comprising transverse conveyor means (8) to collect and transport seeds or grains falling through the grid.

5. A harvesting machine according to Claim 4, wherein the conveyor means (8) moves the seeds/grains to one end of the cutting head.

6. A harvesting machine according to Claim 4, wherein the conveyor means (8) moves the seeds/grains to a central collecting point in the cutting head.

7. A harvesting machine according to any preceding claim, wherein the cutting head is arranged to discharge waste crop material to the ground.

8. A harvesting machine according to any of Claims 1 to 7, wherein the cutting head is arranged to pass waste crop material to one or more further threshing stages external of the cutting head.

9. A harvesting machine according to any preceding claim, comprising means (30-35) for detecting the height of the crop to be harvested ahead of the vehicle, and means (41) responsive to the crop height detected for moving the cutting head, whereby the proportion of the height of the crop cut remains substantially constant.

10. A harvesting machine according to Claim 9, wherein the detecting means (30-35) is mechanical.

11. A harvesting machine according to Claim 10, wherein the mechanical means comprise a pivoted paddle (30, 31) projecting forward of the vehicle and resting on the crop, and signalling means for generating a signal in response to rotation of the paddle as the crop height varies.

12. A harvesting machine according to Claim 11, wherein the paddle carries a lightweight roller (31) which runs on the upper surface of the crop.

13. A harvesting machine according to Claim 12, wherein the roller (31) comprises a plurality of tubes (33) which engage the crop in succession as the roller rotates.

14. A harvesting machine according to Claim 13, wherein the tubes (33) are inflated plastics members.

15. A harvesting machine according to Claim 13, wherein the tubes (33) are formed from an expanded plastics material.

16. A harvesting machine according to any of Claims 11 to 15, comprising balance means (35) to balance the weight of the roller so that it exerts a downward force on the crop just sufficient to maintain contact therewith without causing significant bending of the crop stalks.

17. A harvesting machine according to Claim 9, wherein the detecting means comprise an optical detector.

18. A harvesting machine according to any preceding claim, wherein the cutting head carries a separate cutter to cut down the remaining portion of the crop plants after removal of the seed- or grain-carrying portions.

## Patentansprüche

1. Erntemaschine, umfassend einen Schneidkopf mit Schneidmitteln (2, 6, 54, 55) zum Schneiden von Samen- oder Getreidekörner aufweisendem Erntegut, und Dreschmittel (3, 4, 7) zum Trennen von Samen- oder Getreidekörnern von dem geschnittenen Erntegut, wobei die Dreschmittel über eine Breite dreschen, die im wesentlichen gleich der Breite der Schneidmittel ist, und wobei Abfallmaterial von den Dreschmitteln im wesentlichen über deren gesamte Breite abgeführt wird, **dadurch gekennzeichnet, dass** die Schneidmittel so ausgeführt sind, um Erntegut mit unterschiedlicher Stängellänge zu schneiden und die Dreschmittel eine Dreschtrommel (7) und ein feststehendes Gitter (3) mit sich in Querrichtung erstreckenden Stäben (4) umfassen, wobei das geschnittene Erntegut durch die Dreschtrommel (7) geschlagen wird, während das Erntegut über das Gitter (3) und die Stäbe (4) bewegt wird, und Abfallmaterial mit unterschiedlicher Stängellänge zur Rückseite des Gitters (3) abgeführt wird.

2. Erntemaschine nach Anspruch 1, bei der die Schneidmittel feststehende Messer (2) mit Mitteln zum Drängen des Ernteguts in die Messer umfassen.

3. Erntemaschine nach Anspruch 2, umfassend Schermesser (54), welche relativ zu den feststehenden Messern (55) hin und her bewegbar sind.

4. Erntemaschine nach Anspruch 1, 2 oder 3, umfassend Querfördermittel (8) zum Sammeln und Transportieren von Samen- oder Getreidekörnern, welche durch das Gitter fallen.

5. Erntemaschine nach Anspruch 4, bei der die Fördermittel (8) die Samenkörner/Getreidekörner zu einem Ende des Schneidkopfs bewegen.

6. Erntemaschine nach Anspruch 4, bei der die Fördermittel (8) die Samenkörner/Getreidekörner zu einem zentralen Sammelpunkt in dem Schneidkopf bewegen.

7. Erntemaschine nach einem der vorgenannten Ansprüche, bei der der Schneidkopf so ausgeführt ist, um Abfall des Ernteguts zum Boden hin abzuführen.

8. Erntemaschine nach einem der Ansprüche 1 bis 7, bei dem der Schneidkopf so ausgeführt ist, um Abfall des Ernteguts an eine oder mehrere weitere Dreschstufen außerhalb des Schneidkopfs zu leiten.

9. Erntemaschine nach einem der vorgenannten Ansprüche, umfassend Mittel (30 bis 35) zur Erfassung der Höhe des zu erntenden Ernteguts vor dem Fahrzeug, und Mittel (41) zum Bewegen des Schneidkopfs in Abhängigkeit der erfassten Ernteguthöhe, wodurch das Höhenverhältnis des geschnittenen Ernteguts im wesentlichen konstant bleibt.

10. Erntemaschine nach Anspruch 9, bei der die Erfassungsmittel (30 bis 35) mechanisch sind.

11. Erntemaschine nach Anspruch 10, bei der die mechanischen Mittel einen schwenkbaren Balken (30, 31) umfassen, der von dem Fahrzeug nach vorne vorsteht und auf den Erntegut aufliegt, und Signalgeber zur Erzeugung eines Signals in Abhängigkeit der Drehbewegung des Balkens infolge variierender Ernteguthöhe.

12. Erntemaschine nach Anspruch 11, bei der der Balken eine leichtgewichtige Spindel (31) trägt, welche auf der Oberfläche des Ernteguts läuft.

13. Erntemaschine nach Anspruch 12, bei der die Spindel (31) eine Vielzahl von Rohren (33) umfasst, welche aufeinanderfolgend mit dem Erntegut in Kontakt gelangen, wenn sich die Spindel dreht.

14. Erntemaschine nach Anspruch 13, bei der die Rohre (33) aufgeblasene Kunststoffelemente sind.

15. Erntemaschine nach Anspruch 13, bei der die Rohre (33) aus einem expandierten Kunststoffmaterial geformt sind.

16. Erntemaschine nach einem der Ansprüche 11 bis 15, umfassend Ausgleichsmittel (35) zum Ausbalancieren des Gewichts der Spindel, so das diese eine nach unten gerichtete Kraft auf das Erntegut ausübt, die gerade ausreicht, um einen Kontakt mit diesem aufrechtzuerhalten, ohne jedoch ein signifikantes Biegen der Stängel des Ernteguts zu verursachen.

17. Erntemaschine nach Anspruch 9, bei der die Erfassungsmittel einen optischen Sensor umfassen.

18. Erntemaschine nach einem der vorgenannten Ansprüche, bei der der Schneidkopf eine separate Schneidvorrichtung zum Niederschneiden des verbleibenden Anteils der Erntepflanzen, welcher nach dem Entfernen der samen- oder körnertragenden Abschnitte übrig bleibt, aufweist.

## Revendications

1. - Machine à récolter comprenant une tête de coupe contenant des moyens de coupe (2, 6, 54, 55) pour couper une matière de récolte comprenant des semences ou des grains, et des moyens de battage (3, 4, 7) pour séparer des semences ou des grains à partir de la matière de récolte coupée, dans laquelle les moyens de battage battent sur une largeur sensiblement égale à la largeur du moyen de coupe, et dans lequel la matière de déchet est déchargée du moyen de battage sur sensiblement la pleine largeur de celui-ci, **caractérisée par le fait que** les moyens de coupe sont disposés pour couper la récolte comprenant diverses longueurs de tige, et les moyens de battage comprennent un batteur tournant (7) et une grille fixe (3) comprenant des barres (4) s'étendant transversalement, la récolte coupée étant battue par le batteur (7) alors que la récolte est déplacée sur la grille (3) et les barres (4), et la matière de déchet, comprenant lesdites longueurs variables de tige, étant déchargée sur l'arrière de la grille.

2. - Machine à récolter selon la revendication 1, dans laquelle les moyens de coupe comprennent des lames fixes (2) avec des moyens pour solliciter la récolte dans les lames.

3. - Machine à récolter selon la revendication 2, comprenant des lames de cisaillement (54) se déplaçant en va-et-vient par rapport aux lames fixes (55).

4. - Machine à récolter selon l'une des revendications 1, 2 ou 3, comprenant des moyens de transport transversaux (8) pour recueillir et transporter des semences ou des grains tombant à travers la grille.

5. - Machine à récolter selon la revendication 4, dans laquelle les moyens de transport (8) déplacent les semences/grains jusqu'à une extrémité de la tête de coupe.

6. - Machine à récolter selon la revendication 4, dans laquelle les moyens de transport (8) déplacent les semences/grains jusqu'à un point de collecte central dans la tête de coupe.

7. - Machine à récolter selon l'une quelconque des revendications précédentes, dans laquelle la tête de coupe est disposée pour décharger de la matière de récolte de déchet sur le sol.

8. - Machine à récolter selon l'une quelconque des revendications 1 à 7, dans laquelle la tête de coupe est disposée pour faire passer la matière de récolte de déchet à un ou plusieurs autres stades de battage extérieurs à la tête de coupe.

9. - Machine à récolter selon l'une quelconque des revendications précédentes, comprenant des moyens (30-35) pour détecter la hauteur de la récolte à récolter sur l'avant du véhicule, et des moyens (41) sensibles à la hauteur de récolte détectée pour déplacer la tête de coupe, ce par quoi la proportion de la hauteur de la coupe de récolte reste sensiblement constante.

10. - Machine à récolter selon la revendication 9, dans laquelle les moyens de détection (30-35) sont mécaniques.

11. - Machine à récolter selon la revendication 10, dans laquelle les moyens mécaniques comprennent une palette (30, 31) montée à pivotement se projetant à l'avant du véhicule et se reposant sur la récolte, et des moyens de signalisation pour générer un signal en réponse à une rotation de la palette alors que la hauteur de la récolte varie.

12. - Machine à récolter selon la revendication 11, dans laquelle la palette porte un rouleau (31) de poids léger qui roule sur la surface supérieure de la récolte.

13. - Machine à récolter selon la revendication 12, dans laquelle le rouleau (31) comprend une pluralité de tubes (33) qui engagent la récolte de façon successive alors que le rouleau tourne.

14. - Machine à récolter selon la revendication 13, dans laquelle les tubes (33) sont des éléments en matière plastique gonflés.

15. - Machine à récolter selon la revendication 13, dans laquelle les tubes (33) sont formés à partir d'une matière plastique expansée.

16. - Machine à récolter selon l'une quelconque des revendications 11 à 15, comprenant des moyens d'équilibrage (35) pour équilibrer le poids du rouleau de telle sorte qu'il exerce une force vers le bas sur la récolte juste suffisante pour maintenir un contact avec elle sans provoquer une flexion significative des tiges de récolte.

17. - Machine à récolter selon la revendication 9, dans laquelle les moyens de détection comprennent un détecteur optique.

18. - Machine à récolter selon l'une quelconque des revendications précédentes, dans laquelle la tête de coupe porte un organe de coupe séparé pour couper la partie restante des plantes de récolte après retrait des parties portant les semences ou les grains.
